# EUROPÄISCHE PATENTANMELDUNG

(11) **EP 2 562 036 A1**
(43) Veröffentlichungstag der Anmeldung: **27.02.2013**
(21) Anmeldenummer: 12006057.9
(22) Anmeldetag: 24.08.2012
(51) Int. Cl.: B60P 3/39

(54) **Liegeeinrichtung für ein Kraftfahrzeug**

(30) Priorität: 25.08.2011 DE 202011051081 U
(71) Anmelder: REIMO Reisemobil-Center GmbH, 63329 Egelsbach (DE)
(72) Erfinder: Holona, Günter, D-63329 Egelsbach (DE); Hoffmann, Ralf, D-64293 Darmstadt (DE)
(74) Vertreter: Katscher Habermann Patentanwälte

(57) **Zusammenfassung**

Eine Liegeeinrichtung (1) für ein Kraftfahrzeug mit einem Auflageelement (3) für ein Liegepolster weist ein Rahmengestell (2) mit einem auf dem Rahmengestell (2) angeordneten Auflageelement (3) auf, wobei das Rahmengestell (2) auf einem Fahrzeugboden des Kraftfahrzeugs befestigbar ist. Das Rahmengestell (2) ist lösbar auf dem Fahrzeugboden des Kraftfahrzeugs befestigbar und weist mindestens zwei auf den Fahrzeugboden festlegbare Querträger (7) auf. Die Querträger (7) weisen in gegenüberliegenden Endbereichen (9, 10) jeweils mehrere beabstandet zueinander angeordnete Befestigungseinrichtungen auf. Das Rahmengestell (2) weist mindestens zwei Längsträger (8) auf, die in gegenüberliegenden Endbereichen (13, 14) jeweils beabstandet zueinander angeordnete Befestigungseinrichtungen aufweisen und mit den Querträgern (7) verbindbar sind. Das Rahmengestell (2) weist beabstandet zu dem Fahrzeugboden seitlich vorspringende Befestigungsmittel (22) auf. Das Auflageelement (3) ist höhenverstellbar auf den Rahmengestell (2) gelagert. Das Rahmengestell (2) weist im Bereich des Auflageelements (3) seitlich ausziehbare Stützelemente (21) und das Auflageelement (3) ein ausziehbares Verlängerungselement (17) auf. Das Auflageelement (3) ist ein Lattenrost.

## Beschreibung

Die Erfindung betrifft eine Liegeeinrichtung für ein Kraftfahrzeug mit einem Auflageelement für ein Liegepolster.

In Wohnmobilen oder Wohnwagen sind üblicherweise fest eingebaute Schlafmöbel vorhanden, die es zwei oder mehr Personen ermöglichen, in dem Wohnmobil oder Wohnwagen zu übernachten. Während in großen und geräumigen Wohnmobilen ein Schlafbereich vorgesehen ist, in der eine Liegefläche dauerhaft eingerichtet ist, weisen Wohnmobile oder Wohnwagen mit einem kleinen Nutzraum oftmals Schlafmöbel oder Liegeeinrichtungen auf, die bei Bedarf eine ausreichend große Liegefläche bereitstellen und bei Nichtbenutzung raumsparend verräumt werden können.

Aus EP 1 867 522 A2 ist es beispielsweise bekannt, dass in einem Kastenwagen eine mehrteilige Unterlage quer zur Fahrtrichtung angeordnet ist, wobei zwischen zwei dauerhaft in dem Kastenwagen angeordneten Endelementen ein mittleres Matratzenunterlage-Element schwenkbar befestigt ist. In einer nach oben verschwenkten Stellung gibt das mittlere Matratzenunterlage-Element einen Innenraum weitgehend frei und ermöglicht eine Nutzung des Innenraums als Wohnbereich oder zu Stauzwecken. Wird das schwenkbare Matratzenunterlage-Element in eine waagerechte Stellung verschwenkt, bildet es in Verbindung mit den beiden Endelementen eine zum Ausruhen und Schlafen geeignete Liegefläche.

Aus DE 20 2006 006 151 U1 ist eine Plattform bekannt, die in einem Fahrzeug mit einem Kastenaufbau höhenverstellbar gelagert ist. Mit einer motorisch betreibbaren Seilwinde kann die Plattform zwischen einer niedrigen Position im Innenraum und einer hohen Position unmittelbar unterhalb der Fahrzeugdecke verlagert werden. Wenn die Plattform in eine niedrige Position gebracht und dort festgelegt ist, kann die Plattform als Liegefläche bzw. als Unterlage für eine Matratze verwendet werden.

Derartige Einbauten für Schlafmöbel, beziehungsweise für Liegeflächen sind konstruktiv aufwendig und mit erheblichen Umbaumaßnahmen in dem Kraftfahrzeug verbunden. Die Nutzung des Kraftfahrzeugs wird auch dann beeinträchtigt, wenn sich das Schlafmöbel, beziehungsweise die Liegeeinrichtung nicht in der als Liegefläche nutzbaren Position oder Anordnung befindet.

Aus der Praxis ist es bekannt, dass eine Sitzbank in dem Kraftfahrzeug so ausgestaltet sein kann, dass eine Rückenlehne der Sitzbank bei Bedarf in eine näherungsweise waagerechte Position verschwenkbar ist und in Verbindung mit weiteren Liegeflächenelementen eine zum Ausruhen oder zum Schlafen nutzbare Liegefläche bilden kann. Da die Sitzbank jedoch während des Fahrens mit dem Kraftfahrzeug Mitfahrer aufnehmen und im Falle eines Zusammenstoßes erhebliche Kräfte und Momente aufnehmen können muss, werden hohe konstruktive Anforderungen an eine derartige Sitzbank gestellt, die bei Bedarf in eine Liegefläche umgewandelt werden kann. Eine derartige Sitzbank ist mit hohen Herstellungskosten verbunden und weist oftmals ein beträchtliches Eigengewicht auf. Zudem müssen in der Regel zusätzliche Liegeflächenelemente mit der umgeklappten Sitzbank kombiniert werden, um eine ausrechend große Liegefläche zu erhalten.

Es wird deshalb als eine Aufgabe der vorliegenden Erfindung angesehen, eine Liegeeinrichtung für ein Kraftfahrzeug so auszugestalten, dass möglichst kostengünstig und mit geringen Aufwand bei Bedarf eine ausreichend große und komfortable Liegefläche in dem Kraftfahrzeug gebildet werden kann und die Liegeeinrichtung die Nutzung des Kraftfahrzeugs möglichst wenig beeinträchtigt, falls die Liegeeinrichtung nicht benötigt oder benutzt wird.

Diese Aufgabe wird erfindungsgemäß dadurch gelöst, dass das Auflageelement der Liegeeinrichtung auf einem Rahmengestell angeordnet ist, das auf einem Fahrzeugboden des Kraftfahrzeugs befestigbar ist. Das Rahmengestell kann aus Stangen, Rohren, Stützen oder Streben bestehen und sowohl ausreichend standfest beziehungsweise mechanisch belastbar als auch gleichzeitig äußerst leicht ausgestaltet sein. Das Auflageelement wird ausschließlich durch das Rahmengestell abgestützt, so dass keine zusätzlichen Einbauten oder Modifikationen in dem Kraftfahrzeug notwendig sind. Die Liegeeinrichtung lässt sich kostengünstig herstellen und schnell und ohne größeren Aufwand in dem Kraftfahrzeug montieren. Die hierfür erforderlichen Befestigungsmittel können so ausgestaltet sein, dass eine manuelle Montage möglich und kein gesondertes Werkzeug erforderlich ist. Vorzugsweise ist vorgesehen, dass das Rahmengestell lösbar auf dem Fahrzeugboden befestigbar ist. Durch die lösbare Anordnung und Festlegung auf dem Fahrzeugboden kann das Rahmengestell und damit die gesamte Liegeeinrichtung aus dem Kraftfahrzeug ausgebaut werden, wenn das Kraftfahrzeug nicht zeitweilig auch zum Liegen, beziehungsweise Schlafen verwendet werden soll. Bei einer ausgebauten Liegeeinrichtung ist der gesamte Innenraum des Kraftfahrzeugs anderweitig nutzbar. Bei Bedarf kann die Liegeeinrichtung rasch und mit wenig Aufwand in dem Kraftfahrzeug montiert und befestigt werden.

Einer vorteilhaften Ausgestaltung des Erfindungsgedankens zufolge ist vorgesehen, dass das Rahmengestell mindestens zwei auf dem Fahrzeugboden festlegbare Querträger aufweist, die dem Rahmengestell eine hohe mechanische Stabilität verleihen können und zuverlässig auf dem Fahrzeugboden festlegbar sind. Die Querträger sind zweckmäßigerweise möglichst flach ausgestaltet und bestehen beispielsweise aus einem flachen Metallstab oder aus einem bandförmigen Element aus Metall oder Kunststoff.

Vorzugsweise ist vorgesehen, dass die Querträger in gegenüberliegenden Endbereichen jeweils mehrere beabstandet zueinander angeordnete Befestigungseinrichtungen aufweisen. Die mehreren beabstandet zueinander angeordneten Befestigungseinrichtungen sind so ausgestaltet und angeordnet, dass ein Querträger mit den gegenüberliegenden Endbereichen an von einem Hersteller des Kraftfahrzeugs vorgegebenen Zurrpunkten oder Befestigungspunkten auf dem Fahrzeugboden festgelegt und befestigt werden kann. Durch die mehreren Befestigungseinrichtungen kann derselbe Querträger in verschiedenen Kraftfahrzeugmodellen mit den für das betreffende Kraftfahrzeugmodell vorgesehenen Befestigungseinrichtungen an den jeweiligen Zurrpunkten, beziehungsweise Befestigungspunkten befestigt werden. Eine gesonderte Ausgestaltung oder Anpassung verschiedener Querträger an die jeweiligen Kraftfahrzeugmodelle ist nicht erforderlich. Das Rahmengestell kann mit einer einheitlichen Bauweise und Ausgestaltung in verschiedenen Kraftfahrzeugen verwendet und festgelegt werden, ohne das größere Veränderungen oder sicherheitsrelevante Modifikationen an dem Kraftfahrzeug erforderlich werden.

Es ist ebenso vorgesehen, dass das Rahmengestell mindestens zwei Längsträger aufweist, deren gegenüberliegenden Endbereiche jeweils mehrere beabstandet zueinander angeordnete Befestigungseinrichtungen aufweisen und mit den Querträgern verbindbar sind. Durch die mehreren Befestigungseinrichtungen können die Querträger in Abhängigkeit von dem jeweiligen Kraftfahrzeugmodell in einem unterschiedlichen Abstand in Längsrichtung zueinander mit den Längsträgern verbunden werden.

Auf diese Weise kann mit einheitlich ausgestalteten Querträgern und Längsträgern ein Rahmengestell gebildet werden, das hinsichtlich seiner Länge und seiner Breite an unterschiedlich große Nutzräume von Kraftfahrzeugen und insbesondere an unterschiedlich angeordnete Zurrpunkte und Befestigungspunkte in dem jeweiligen Fahrzeugboden der unterschiedlichen Kraftfahrzeugmodelle angepasst werden kann.

Falls das Rahmengestell ausschließlich für ein vorgegebenes Fahrzeugmodell verwendet werden soll, kann beispielsweise aus Kostengründen auf die mehreren beabstandet zueinander vorgesehenen Befestigungseinrichtungen bei den Querträgern bzw. bei den Längsträgern verzichtet werden oder deren Anzahl auf wenige Variationsmöglichkeiten beschränkt werden.

Die Querträger und die damit verbundenen Längsträger bilden einen üblicherweise rechteckförmigen Grundrahmen, auf dem das Auflageelement abgestützt und angeordnet werden kann.

Um das Rahmengestell möglichst kostengünstig und leicht ausgestalten zu können ist es vorgesehen, dass das Rahmengestell beabstandet zu dem Fahrzeugboden seitlich vorspringende Befestigungsmittel aufweist. Die Befestigungsmittel können seitlich vorspringende Streben oder Abstandhalter sein. Es ist ebenso denkbar, dass die seitlich vorspringen Befestigungsmittel als Haken, Schlaufen oder Gurte ausgebildet sind, die seitlich mit einer Seitenwand des Kraftfahrzeugs oder mit seitlich angeordneten Einbauten verbindbar sind. Durch die seitlich vorspringenden Befestigungsmittel wird eine seitliche Verlagerung des beabstandet zu dem Fahrzeugboden angeordneten Auflageelements verhindert. Da die seitlich vorspringenden Befestigungsmittel einer seitlichen Verlagerung des Auflageelements und damit einem Verkippen oder Verwinden des Rahmengestells entgegenwirken, können die anderen Komponenten des Rahmengestells bei gleichbleibenden Stabilitätseigenschaften weniger verwindungsteif und damit leichter und kostengünstiger im Vergleich zu einer Ausgestaltung ohne seitlich vorspringende Befestigungsmittel ausgebildet sein.

Um in der Höhe an verschiede Anforderungen und Innenraumgestaltungen, beziehungsweise Innenraumeinrichtungen angepasst werden zu können ist vorgesehen, dass das Auflageelement höhenverstellbar auf dem Rahmengestell gelagert ist. Die Höhe des Auflageelements kann dadurch in einfacher Weise beispielsweise so vorgegeben werden, dass das Auflageelement über einer zusammengeklappten Sitzbank angeordneten ist und diese überragt. Die Höhe des Auflageelements kann auch an seitlich angrenzende Einbauten oder Ablage-, beziehungsweise Auflageflächen angepasst werden, um beispielsweise bündig an diese Auflageflächen anzuschließen.

Einer vorteilhaften Ausgestaltung des Erfindungsgedankens zufolge ist vorgesehen, dass das Rahmengestell im Bereich des Auflageelements seitlich ausziehbare Stützelemente aufweist. Das Auflageelement kann ebenso wie das Rahmengestell so ausgestaltet sein, dass es sich nicht über die gesamte nutzbare Breite oder Länge des Innenraums des Kraftfahrzeugs erstreckt. In Abhängigkeit von den Abmessungen des für die Liegeeinrichtung nutzbaren Innerraums des Kraftfahrzeugs kann seitlich neben dem Auflageelement ein zunächst anderweitig nutzbarer Freiraum verbleiben. Im Bedarfsfall können geeignete Stützelemente seitlich ausgezogen werden und die Auflagefläche für Liegepolster vergrößern, sodass eine größere Liegefläche gebildet und zum Ausruhen oder Schlafen genutzt werden kann.

Einer besonders vorteilhaften Ausgestaltung des Erfindungsgedankens zufolge ist vorgesehen, dass das Auflageelement ein ausziehbares Verlängerungselement aufweist. Das ausziehbare Verlängerungselement kann sowohl in Längsrichtungen als auch in quer dazu ausziehbar an dem Rahmengestell oder an einem Grundelement des Auflageelements angeordnet und gelagert sein. Auf diese Weise ist es möglich, die Abmessungen, beziehungsweise die Grundfläche der Liegeeinrichtung zu verringern und im Bedarfsfall durch das Ausziehen des Verlängerungselements die zur Verfügung gestellte Liegefläche zu vergrößern.

So kann beispielsweise die Liegeeinrichtung hinter einer Sitzbank in dem Kraftfahrzeug montiert werden. Während der Fahrt kann die Sitzbank zur Beförderungen von sitzenden Passagieren genutzt werden. Bei Bedarf kann die Sitzbank umgeklappt und ein in Längsrichtung ausziehbares Verlängerungselement des Auflageelements über die umgeklappte Sitzbank hinweg ausgezogen werden. Die dadurch gebildete Liegefläche erstreckt sich dann über die Sitzbank hinweg. Auf diese Weise wird der Raum über der Sitzbank als Liegefläche nutzbar, ohne dass die Sitzbank selbst ein Bestandteil der Liegeeinrichtung sein muss und deshalb beispielsweise eine entsprechende Polsterung aufweisen muss oder in eine möglichst waagerechte Ausrichtung umgeklappt werden muss.

Im Hinblick auf einen möglichst großen Schlafkomfort ist vorgesehen, dass das Auflageelement ein Lattenrost ist. Zweckmäßigerweise ist auch das ausziehbare Verlängerungselement als Lattenrost ausgestaltet. Die Polsterauflagen können beispielsweise mehrlagig oder als Matratze mit zusätzlichen Federeinrichtungen ausgestaltet sein, um einen möglichst hohen Schlafkomfort zu ermöglichen. Es ist ebenso denkbar, dass das Auflageelement eine Platte aus Holz oder aus Kunststoff oder aber ein Gitter, ein Netz oder ein textiles Geflecht ist. Die Polsterauflage kann auch ein Schaumstoff-Formteil oder dergleichen sein.

Nachfolgend wird ein Ausführungsbeispiel näher erläutert, dass in der Zeichnung exemplarisch dargestellt ist. Es zeigt:
Figur 1 eine Schrägansicht einer Liegeeinrichtung für ein Kraftfahrzeug mit einem als Lattenrost ausgebildeten Auflageelement, das auf einem Rahmengestell angeordnet ist,
Figur 2 eine Darstellung des in Figur 1 gezeigten Rahmengestells ohne das darauf angeordnete Auflageelement, und
Figur 3 eine schematische Ansicht der in Figuren 1 und 2 abgebildeten Liegeeinrichtungen in einem Kraftfahrzeug mit einem Kastenaufbau.

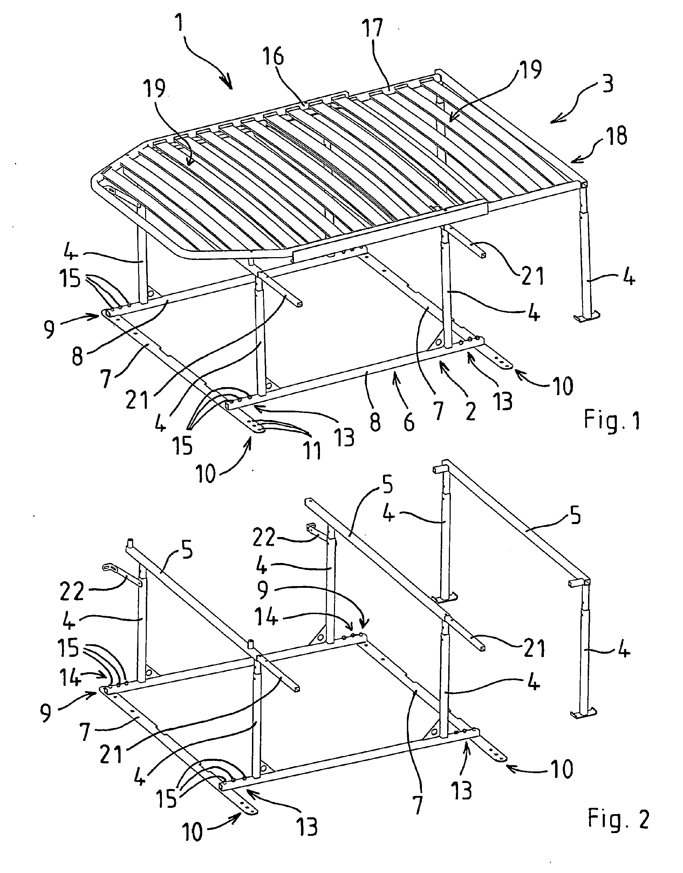

In den Figuren 1 bis 3 ist exemplarisch eine Liegeeinrichtung 1 für ein Kraftfahrzeug dargestellt, die ein Rahmengestell 2 und ein auf den Rahmengestell 2 angeordnetes Auflageelement 3 aufweist. Das Auflageelement 3 wird von sechs teleskopierbaren Stützen 4 getragen. Jeweils zwei Stützen 4 münden in eine Traverse 5, die auf den zugeordneten Stützen 4 höhenverstellbar gelagert und abgestützt wird. Das Auflageelement 3 liegt auf den Traversen 5 auf und ist auf den Traversen 5 befestigt, beziehungsweise fixiert.

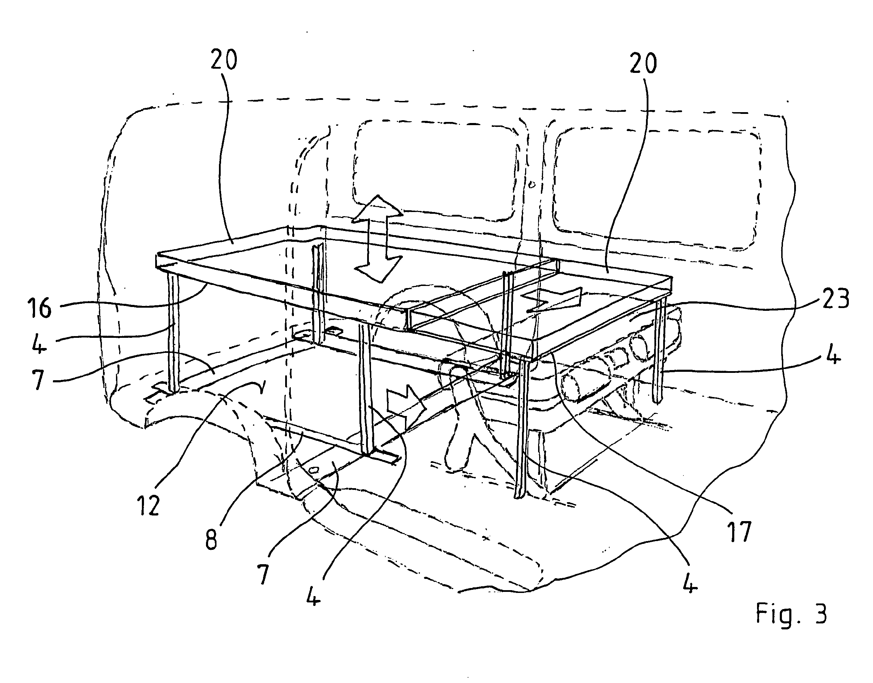

An einer Unterseite 6 weist das Rahmengestell 2 zwei flache und bandförmig ausgestaltete Querträger 7 sowie zwei Längsträger 8 auf, die rechteckförmig miteinander verbunden sind. Jeder Querträger 7 weist in gegenüberliegenden Endbereichen 9, 10 mehrere Bohrungen 11 auf, die zur Befestigung des Querträgers 7 an Zurrpunkten und Befestigungspunkten auf einem in Fig. 3 dargestellten Fahrzeugboden 12 des Kraftfahrzeugs vorgesehen und entsprechend angeordnet sind. Die Bohrungen 11 bilden in Verbindung mit daran angepassten Befestigungsschrauben oder Befestigungsstiften Befestigungseinrichtungen, mit denen die Querträger 7 auf dem Fahrzeugboden 12 festgelegt werden können.

Die Befestigungsschrauben oder Befestigungsstifte können ohne Werkzeug manuell gelöst oder befestigt werden. Sofern die Liegeeinrichtung 1 in dem Kraftfahrzeug über einen längeren Zeitraum hinweg nicht benötigt wird, kann die Liegeeinrichtung 1 durch lösen der Befestigungsschrauben von dem Fahrzeugboden 12 gelöst und aus dem Kraftfahrzeug herausgenommen werden. Wird die Liegeeinrichtung 1 benötigt, kann die Liegeeinrichtung 1 in dem Innenraum des Kraftfahrzeugs angeordnet und wenigen Handgriffen auf dem Fahrzeugboden 12 befestigt werden.

Die Querträger 7 sind möglichst flach ausgestaltet, um einen unter dem Auflageelement 3 befindlichen Laderaum möglichst ungehindert zugänglich bleiben zu lassen.

Die Längsträger 8 weisen ebenfalls beabstandet zueinander in gegenüberliegenden Endbereichen 13, 14 mehrere Bohrungen 15 auf, sodass der Abstand der Querträger 7, die durch diese Bohrungen 15 hindurch mit den Längsträgern 8 verbunden werden, in dem durch die Bohrungen 15 vorgegebenen Schritten variabel vorgegeben werden kann. Gegebenenfalls kann auch der Abstand der beiden Längsträger 8 relativ zueinander auf den Querträgern 7 variabel vorgegeben werden. Auf diese Weise kann ein aus einheitlichen Komponenten zusammengesetztes Rahmengestell 2 an verschiede Abmessungen der verschiedenen Kraftfahrzeugmodelle sowie an die jeweils unterschiedliche Anordnung der Zurrpunkt und Befestigungspunkte auf dem betreffenden Fahrzeugboden 12 angepasst werden. Der Aufwand für eine dedizierte Anpassung der Liegeeinrichtung 1 an verschiedene Kraftfahrzeugmodelle wird dadurch erheblich verringert, sodass die Liegeeinrichtung 1 besonders kostengünstig hergestellt und angeboten werden kann.

Das Auflageelement 3 weist ein Grundelement 16 und ein in Längsrichtung ausziehbar an dem Grundelement 16 gelagertes Verlängerungselement 17 auf. An dem Verlängerungselement 17 sind an einem dem Grundelement 16 abgewandten Ende 18 zwei der Stützen 4 befestigt, die ebenfalls teleskopierbar und damit höhenverstellbar ausgestaltet sind und das ausgezogene Verlängerungselement 17 auf dem Fahrzeugboden 12 abstützen. Sowohl das Grundelement 16 als auch das Verlängerungselement 17 weisen einen Lattenrost 19 auf. Auf den Lattenrost 19 können in den Abmessungen angepasste Polsterauflagen 20 aufgelegt werden.

Die Breite des Rahmengestells 2 und des darauf angeordneten Auflageelements 3 ist geringer als die benutzbare Breite des Innenraums des Kraftfahrzeugs. Neben der Liegeeinrichtung 1 verbleibt ein schmaler Stauraum, der beispielsweise für Einbaumöbel oder aber zum Beladen mit einem Fahrrad oder mit anderen Gegenständen genutzt werden kann. Sofern eine breitere Liegefläche gewünscht wird, können Stützelemente 21 seitlich aus den Traversen 5 rausgezogen werden. Die ausgezogenen Stützelemente 21 bilden eine Auflagefläche für eine seitliche Ergänzungsplatte, die ihrerseits als Unterlage für eine Polsterauflage dient.

Auf einer den Stützelementen 21 gegenüberliegenden Seite sind seitlich vorspringende Befestigungsmittel 22, nämlich Befestigungswinkel an den Stützen 4 angeordnet. Die Befestigungsmittel 22 können mit einer Seitenwand des Kraftfahrzeugs verbunden werden und erhöhen die Seitenstabilität des Rahmengestells 2.

Die Abmessungen der Liegeeinrichtung 1 sind in Längsrichtung so vorgegeben, dass die Liegeeinrichtung 1 hinter einer Sitzbank 23 mit zwei oder drei Sitzplätzen angeordnet werden kann. Wenn die Liegeeinrichtung zum Schlafen genutzt werden soll, kann die Sitzbank 23 umgeklappt und das Verlängerungselement 17 ausgezogen werden, dass im ausgezogenen Zustand über die umgeklappte Sitzbank 23 ragt und zusammen mit dem Grundelement 16 eine ausreichend große Liegefläche bildet.

## Patentansprüche

1. Liegeeinrichtung (1) für ein Kraftfahrzeug mit einem Auflageelement (3) für ein Liegepolster, **dadurch gekennzeichnet, dass** das Auflageelement (3) auf einem Rahmengestell (2) angeordnet ist, dass auf einem Fahrzeugboden des Kraftfahrzeugs befestigbar ist.

2. Liegeeinrichtung (1) nach Anspruch 1, **dadurch gekennzeichnet, dass** das Rahmengestell (2) lösbar auf dem Fahrzeugboden des Kraftfahrzeugs befestigbar ist.

3. Liegeeinrichtung (1) nach Anspruch 1 oder Anspruch 2, **dadurch gekennzeichnet, dass** das Rahmengestell (2) mindestens zwei auf den Fahrzeugboden festlegbare Querträger (7) aufweist.

4. Liegeeinrichtung (1) nach Anspruch 3, **dadurch gekennzeichnet, dass** die Querträger (7) in gegenüberliegenden Endbereichen (9, 10) jeweils mehrere beabstandet zueinander angeordnete Befestigungseinrichtungen aufweisen.

5. Liegeeinrichtung (1) nach einem der vorangehenden Ansprüche, **dadurch gekennzeichnet, dass** das Rahmengestell (2) mindestens zwei Längsträger (8) aufweist, die in gegenüberliegenden Endbereichen (13, 14) jeweils beabstandet zueinander angeordnete Befestigungseinrichtungen aufweisen und mit dem Querträgern (7) verbindbar sind.

6. Liegeeinrichtung (1) nach einem der vorangehenden Ansprüche, **dadurch gekennzeichnet, dass** das Rahmengestell (2) beabstandet zu dem Fahrzeugboden seitlich vorspringende Befestigungsmittel (22) aufweist.

7. Liegeeinrichtung (1) nach einem der vorangehenden Ansprüche, **dadurch gekennzeichnet, dass** das Auflageelement (3) höhenverstellbar auf den Rahmengestell (2) gelagert ist.

8. Liegeeinrichtung (1) nach einem der vorangehenden Ansprüche, **dadurch gekennzeichnet, dass** das Rahmengestell (2) im Bereich des Auflageelements (3) seitlich ausziehbare Stützelemente (21) aufweist.

9. Liegeeinrichtung (1) nach einem der vorangehenden Ansprüche, **dadurch gekennzeichnet, dass** das Auflageelement (3) ein ausziehbares Verlängerungselement (17).

10. Liegeeinrichtung (1) nach einem der vorangehenden Ansprüche, **dadurch gekennzeichnet, dass** das Auflageelement (3) ein Lattenrost ist.
